# EUROPÄISCHE PATENTANMELDUNG

(11) **EP 1 983 779 A1**
(43) Veröffentlichungstag der Anmeldung: **22.10.2008**
(21) Anmeldenummer: 08011001.8
(22) Anmeldetag: 01.07.2005
(51) Int. Cl.: H04Q 7/32, H04M 1/60

(54) **Vorrichtung zur Kommunikation über ein Funknetz**

(30) Priorität: 02.07.2004 DE 102004032385
(62) Teilanmeldung aus: 05759748.6
(71) Anmelder: Peiker, Andreas, 61381 Friedrichsdorf (DE)
(72) Erfinder: Peiker, Andreas, 61381 Friedrichsdorf (DE)
(74) Vertreter: Otten, Herbert

(57) **Zusammenfassung**

Die Erfindung betrifft eine Vorrichtung (1) zur Kommunikation über ein Funknetz aus einem Fahrzeug (V).

## Beschreibung

Die Erfindung betrifft eine Vorrichtung zur Kommunikation über ein Funknetz bzw. ein Adapter zur Integration in ein Fahrzeug.

Aus der Zeitschrift "Auto Zeitung", Ausgabe 25/2003, Seite 74 f. ist ein Fahrzeugfesteinbau der Firma Nokia mit einem GSM-Modul ohne SIM-Karte und Bluetooth-Funktionalität bekannt, welcher über das sogenannte SIM ACCESS PROTOCOLL (SAP) über Funk auf die SIM-Karten-Daten eines SAP- und BT-fähigen Mobiltelefons zugreift und sich mit diesen im Mobilfunknetz einbucht. Ein derartiger Festeinbau ist bezüglich einer Nachrüstung nachteilig, da bis auf Lautsprecher, Mikrofon und Außenantenne sämtliche Alt-Komponenten ausgebaut und sämtliche Neu-Komponenten neu eingebaut werden müssen.

Aufgabe der Erfindung ist es, eine austauschfreundliche Kommunikationsvorrichtung für ein Fahrzeug zur Verfügung zu stellen.

Diese Aufgabe wird ausgehend von den Merkmalen der Oberbegriffe der Ansprüche 1 und 14 durch die kennzeichnenden Merkmale der jeweiligen Ansprüche gelöst. In den Unteransprüchen sind vorteilhafte und zweckmäßige Weiterbildungen angegeben.

Die erfindungsgemäße Vorrichtung zur Kommunikation über ein Funknetz aus einem Fahrzeug nach Anspruch 1 umfasst eine im Fahrzeug eingebaute Freisprecheinrichtung mit wenigstens Lautsprecher und Mikrofon, ein GSM-Modul mit einem SIM-Kartenleser, wobei das GSM-Modul in einem Adapter angeordnet ist, welcher eine mobilen, eigenständig handhabbaren Baueinheit mit einer elektromechanischen Schnittstelle bildet, welche über eine universelle, elektromechanische Schnittstelle mit dem Fahrzeug, den dortigen fahrzeugseitigen Komponenten der dortigen Freisprecheinrichtung und einer Fahrzeugaußenantenne verbindbar ist. Eine derartige Vorrichtung erlaubt es, auch in einem Fahrzeug, welches über eine moderne elektromechanische Schnittstelle verfügt, eine von konservativen KundEnkreisen geforderte klassische Autotelefonfunktion zu realisieren, bei welcher vollständig auf ein Mobiltelefon verzichtet werden kann.

Der Adapter der erfindungsgemäßen Vorrichtung umfasst eine elektromechanische Schnittstelle und ein GSM-Modul, wobei dem GSM-Modul eine Schnittstelle zur drahtlosen Datenübertragung und/oder ein SIM-Kartenleser zugeordnet sind.

Weitere Einzelheiten der Erfindung werden in der Zeichnung anhand von schematisch dargestellten Ausführungsbeispielen beschrieben.

Hierbei zeigt:
- Figur 1 bis 3:: drei Ausführungsvarianten einer Vorrichtung zum gemeinsamen Betrieb mit einem Mobiltelefon und
- Figur 4 bis 6:: drei Ausführungsvarianten einer Vorrichtung zum Betrieb ohne Mobiltelefon.

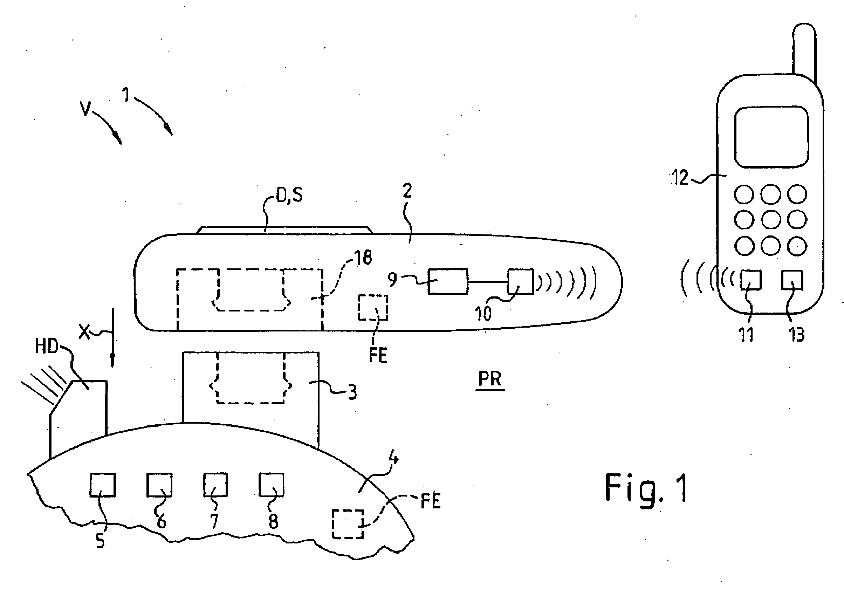

In der Figur 1 ist eine Vorrichtung 1 zur Kommunikation über ein Funknetz dargestellt. Die Vorrichtung 1 besteht im wesentlichen aus eine Baueinheit 2, welche mit einer elektromechanischen Schnittstelle 18 auf einer mechanischen und elektrischen Schnittstelle 3 befestigbar ist. Die Schnittstelle 3 ist auf einer Konsole 4 im Passagierraum PR eines nicht näher dargestellten Fahrzeugs V fest montiert und trägt die Baueinheit 2, wenn diese in eine Pfeilrichtung x auf die Schnittstelle aufgesetzt ist. Im bzw. am Fahrzeug V ist eine Freisprecheinrichtung 5 mit Lautsprecher 6 und Mikrofon 7 und eine Außenantenne 8 angeordnet. Die Baueinheit 2 umfasst ein GSM-Modul 9 und eine Schnittstelle 10 zur drahtlosen Datenübertragung zu einer entsprechenden Schnittstelle 11 eines Mobiltelefons 12. Mit Hilfe der Schnittstelle 11 und 12 erfolgt eine Übertragung der SIM-Daten einer im Mobiltelefon 12 befindlichen SIM-Karte 13 entsprechend eines sogenannten Sim Access Protocolls (SAP). Die Baueinheit 2 kann mit verschiedenen SAP-fähigen Mobiltelefonen und in verschiedenen Fahrzeugen Verwendung finden, sofern eine Freisprecheinrichtung mit einer entsprechenden Schnittstelle zur Verfügung steht. Die Schnittstelle 3 ist als Steckerelement ausgeführt, welches die Baueinheit 2 formschlüssig und/oder kraftschlüssig hält. Eine Freisprechelektronik FE der Freisprecheinrichtung 5 befindet sich fest Am Fahrzeug V und/oder in der Baueinheit 2. Gemäß einer zusätzlich in der Figur 1 dargestellten Ausführungsvariante sind auf der Baueinheit 2 Solarzellen S oder ein Display D mit integrierten Solarzellen angeordnet, um die Baueinheit 2 mit Energie zu versorgen. Weiterhin ist auf der Konsole 4 ein sogenanntes Head-up-Display HD dargestellt, mit welchem Informationen auf eine nicht dargestellte Windschutzscheibe des Fahrzeugs V projiziert werden können, wobei die darzustellenden Informationen von der Baueinheit 2 drahtlos oder drahtgebunden an des Head-up-Display HD übertragen werden.

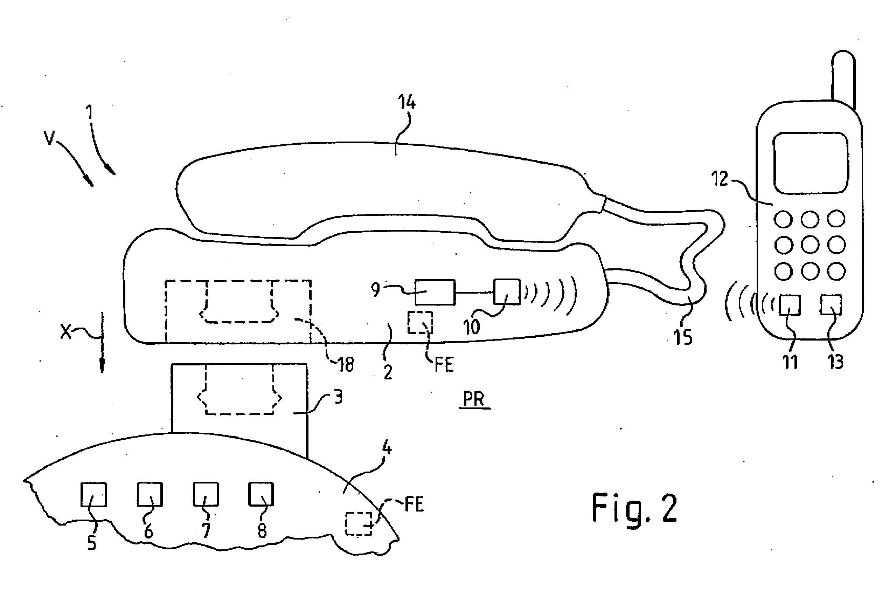

In der Figur 2 ist eine ähnlich zu der in der Figur 1 dargestellten Vorrichtung ausgeführte Vorrichtung 1 gezeigt. Bei dieser Vorrichtung 1 ist die Baueinheit 2 mit einem über ein Kabel 15 angeschlossenen Handapparat 14 ausgestattet. Der Handapparat 14 erlaubt, dass im Fahrzeug Telefonate unter Ausschluss weiterer Insassen geführt werden können. Bezüglich der weiteren Komponenten wird auf die Beschreibung zur Figur 1 verwiesen.

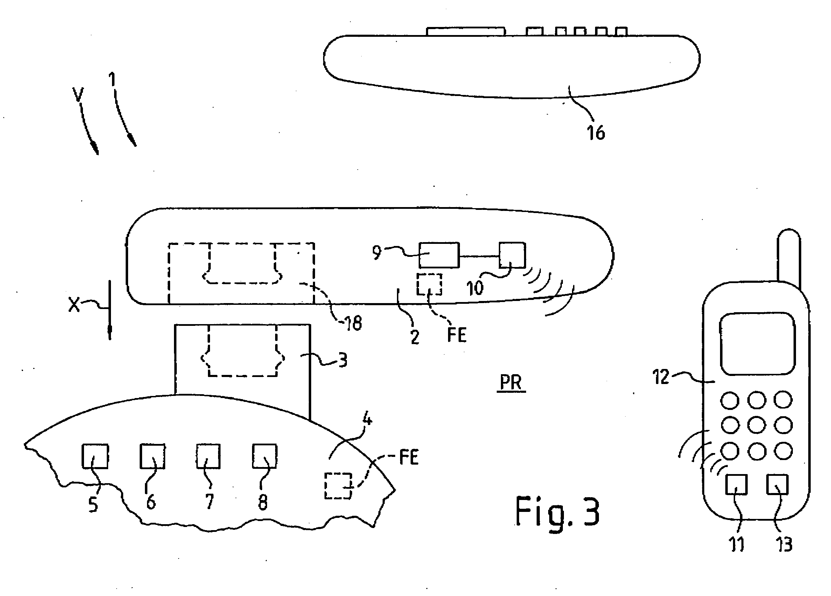

In der Figur 3 ist eine ähnlich zu der in der Figur 1 dargestellten Vorrichtung ausgeführte Vorrichtung 1 gezeigt. Bei dieser Vorrichtung 1 ist die Baueinheit 2 mit einem schnurlosen Handapparat 16 ausgestattet. Zwischen dem Handapparat und der Bauseinheit 2 besteht unabhängig von der Funkverbindung zwischen dem Mobiltelefon 12 und der Baueinheit 2 eine weitere Funkverbindung. Der Handapparat 16 erlaubt, dass im Fahrzeug Telefonate unter Ausschluss weiterer Insassen geführt werden können. Bezüglich der weiteren Komponenten wird auf die Beschreibung zur Figur 1 verwiesen.

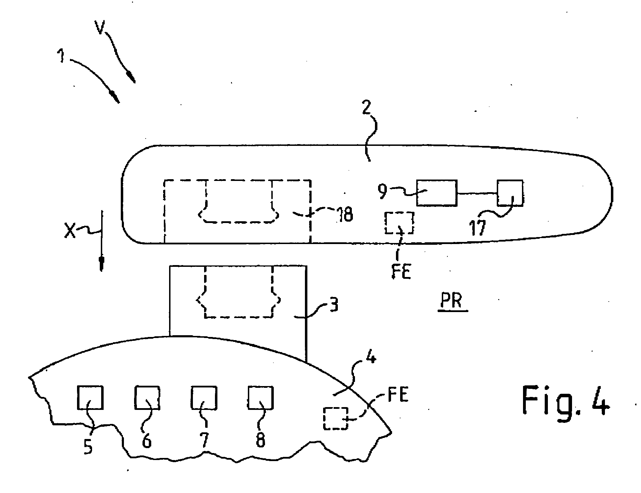

In der Figur 4 ist eine Vorrichtung 1 zur Kommunikation über ein Funknetz dargestellt. Die Vorrichtung 1 besteht im wesentlichen aus eine Baueinheit 2, welche in einem Passagierraum PR eines Fahrzeugs V mit ihrer elektromechanischen Schnittstelle 18 auf einer mechanischen und elektrischen Schnittstelle 3 befestigbar ist. Die Schnittstelle 3 ist auf einer Konsole 4 eines nicht dargestellten Fahrzeugs fest montiert und trägt die Baueinheit 2, wenn diese in eine Pfeilrichtung x auf die Schnittstelle aufgesetzt ist. Im bzw. am Fahrzeug ist eine Freisprecheinrichtung 5 mit Lautsprecher 6 und Mikrofon 7 und eine Außenantenne 8 angeordnet. Die Baueinheit 2 umfasst ein GSM-Modul 9 und einen SIM-Kartenleser 17, in welchen eine nicht dargestellte SIM-Karte einsetzbar ist. Die Baueinheit 2 ist zwischen beliebigen Fahrzeugen, welche eine entsprechende Schnittstelle mit den entsprechenden nachgeschalteten Komponenten autweisen austauschbar. Die Freisprecheinrichtung 5 umfasst eine Freisprechelektronik FE, welche am Fahrzeug V und/oder in der Baueinheit 2 angeordnet ist.

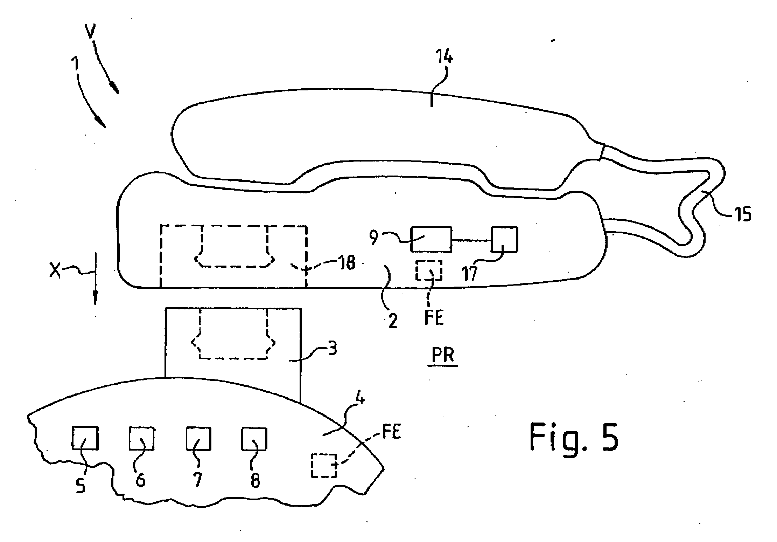

In der Figur 5 ist eine ähnlich zu der in der Figur 4 dargestellten Vorrichtung ausgeführte Vorrichtung 1 gezeigt. Bei dieser Vorrichtung 1 ist die Baueinheit 2 mit einem über ein Kabel 15 angeschlossenen Handapparat 14 ausgestattet. Der Handapparat 14 erlaubt, dass im Fahrzeug Telefonate unter Ausschluss weiterer Insassen geführt werden können. Bezüglich der weiteren Komponenten wird auf die Beschreibung zur Figur 4 verwiesen.

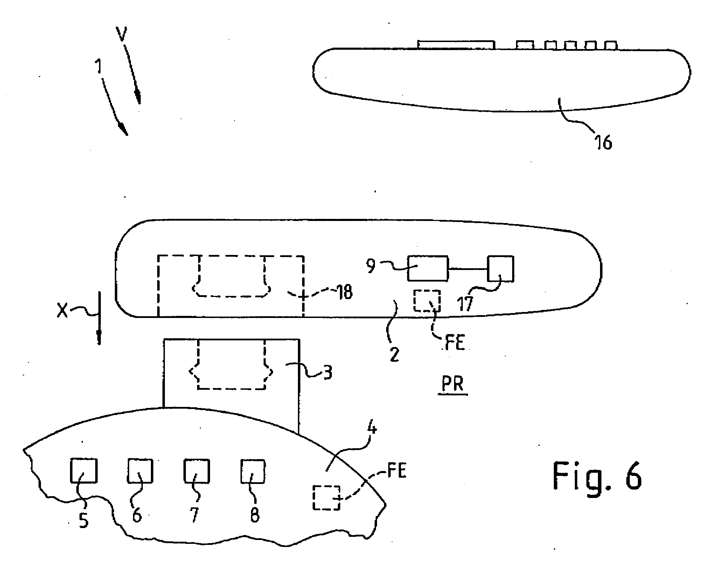

In der Figur 6 ist eine ähnlich zu der in der Figur 4 dargestellten Vorrichtung ausgeführte Vorrichtung 1 gezeigt. Bei dieser Vorrichtung 1 ist die Baueinheit 2 mit einem schnurlosen Handapparat 16 ausgestattet. Zwischen dem Handapparat und der Bauseinheit 2 besteht eine Funkverbindung. Der Handapparat 16 erlaubt, dass im Fahrzeug Telefonate unter Ausschluss weiterer Insassen geführt werden können. Bezüglich der weiteren Komponenten wird auf die Beschreibung zur Figur 4 verwiesen.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche. Insbesondere sieht die Erfindung auch die Verwendung von Funkmodulen nach anderen Funkstandards vor. So sind zum Beispiel UMTS-Funkmodule vorgesehen.

### Bezugszeichenliste:

- 1: Vorrichtung
- 2: Baueinheit, Adapter
- 3: elektromechanische Schnittstelle an 4
- 4: Konsole
- 5: Freisprecheinrichtung
- 6: Lautsprecher
- 7: Mikrofon
- 8: Außenantenne
- 9: GSM-Modul
- 10: Schnittstelle zur drahtlosen Datenübertragung
- 11: Schnittstelle zur drahtlosen Datenübertragung
- 12: Mobiltelefon
- 13: SIM-Karte
- 14: schurgebundener Handapparat
- 15: Kabel
- 16: schnurloser Handapparat
- 17: SIM-Kartenleser
- 18: elektromechanische Schnittstelle von 2
- x: Pfeilrichtung
- D: Display
- FE: Freisprechelektronik
- HD: Head-up-Display
- PR: Passagierraum
- S: Solarzelle
- V: Fahrzeug

## Patentansprüche

1. Vorrichtung (1) zur Kommunikation über ein Funknetz aus einem Fahrzeug (V), welche die folgenden Komponenten umfasst, eine im Fahrzeug (V) eingebaute Freisprecheinrichtung (5) mit wenigstens Lautsprecher (6) und Mikrofon (7), ein GSM-Modul (9) mit einem SIM-Kartenleser (17), **dadurch gekennzeichnet, dass** das GSM-Modul (9) in einem Adapter (2) angeordnet ist, welcher eine mobile, eigenständig handhabbaren Baueinheit (2) mit einer elektromechanischen Schnittstelle (18) bildet, welche über eine universelle, elektromechanische Schnittstelle (3) mit dem Fahrzeug (V), den dortigen fahrzeugseitigen Komponenten (6, 7) der Freisprecheinrichtung (5) und einer Fahrzeugaußenantenne (8) verbindbar ist.

2. Vorrichtung nach Anspruch 1, **dadurch gekennzeichnet, dass** an die Baueinheit (2) insbesondere ein schnurgebundener Handapparat (14) anschließbar ist und/oder insbesondere ein schnurloser Handapparat (16) anschließbar ist.

3. Vorrichtung nach einem der vorhergehenden Ansprüche, **dadurch gekennzeichnet, dass** die Baueinheit (2) durch die mechanische Schnittstelle (3) ohne weitere Abstützung tragbar ist.

4. Vorrichtung nach einem der vorhergehenden Ansprüche, **dadurch gekennzeichnet, dass** die Baueinheit (2) insbesondere elektronische Komponenten zur Anpassung des GSM-Moduls (9) auf die Freisprecheinrichtung (5) umfasst und/oder dass die Baueinheit (2) insbesondere elektronische Komponenten zur Anpassung des GSM-Moduls (9) auf das Mobiltelefon (12) umfasst.

5. Vorrichtung nach einem der vorhergehenden Ansprüche, **dadurch gekennzeichnet, dass** die Baueinheit (2) insbesondere wenigstens eine Anzeigevorrichtung umfasst und/oder insbesondere wenigstens einen Schalter umfasst und/oder insbesondere wenigstens einen Taster umfasst.

6. Vorrichtung nach einem der vorhergehenden Ansprüche, **dadurch gekennzeichnet, dass** die in der Baueinheit (2) angeordnete Schnittstelle (10) zur drahtlosen Datenübertragung im Nahbereich zur Kommunikation über unterschiedliche Funkstandards vorgesehen ist.

7. Vorrichtung nach einem der vorhergehenden Ansprüche, **dadurch gekennzeichnet, dass** mehrere Mobiltelefone (12) mittels der Baueinheit (2) im Fahrzeug betreibbar sind.

8. Vorrichtung nach einem der vorhergehenden Ansprüche, **dadurch gekennzeichnet, dass** weitere elektronische Geräte, wie z.B. Laptop und PDA mittels der Schnittstelle (10) der Baueinheit (2) an der Freisprecheinrichtung (5) betreibbar sind.

9. Vorrichtung nach einem der vorhergehenden Ansprüche, **dadurch gekennzeichnet, dass** die Freisprecheinrichtung (5) als Multimediaeinrichtung ausgebildet ist und insbesondere Mittel zur visuellen Darstellung umfasst.

10. Vorrichtung nach einem der vorhergehenden Ansprüche, **dadurch gekennzeichnet, dass** die Freisprecheinrichtung (5) eine Freisprechelektronik (FE) umfasst, welche in der Baueinheit (2) angeordnet ist und/oder fest im Fahrzeug (V) eingebaut ist.

11. Vorrichtung nach einem der vorhergehenden Ansprüche, **dadurch gekennzeichnet, dass** die Baueinheit (2) durch elektrische Energie erzeugende Solarzellen (S) betreibbar ist, welche insbesondere auf der Baueinheit (2) angeordnet sind.

12. Vorrichtung nach einem der vorhergehenden Ansprüche, **dadurch gekennzeichnet, dass** die Baueinheit (2) durch ein Display (D), welches insbesondere Energie erzeugende Solarzellen umfasst, betreibbar ist, welches insbesondere auf der Baueinheit (2) angeordnet ist, und/oder dass von der Baueinheit (2) drahtgebunden oder drahtlos Anzeigeinformationen an ein Display, insbesondere ein Head-up-Display (HD) übermittelbar sind.

13. Vorrichtung nach einem der vorhergehenden Ansprüche, **dadurch gekennzeichnet, dass** die Baueinheit (2) der Vorrichtung (1) unabhängig von dem Fahrzeug (V) mit einer Vielzahl von Mobiltelefonen und einer Vielzahl von Fahrzeugen mit wenigstens einer eingebauten Komponente (5, 6, 7) der Freisprecheinrichtung (5) betreibbar ist.

14. Adapter zur Integration in ein Fahrzeug, **dadurch gekennzeichnet, dass** der Adapter (2) eine elektromechanische Schnittstelle (18) und ein GSM-Modul (9) aufweist, wobei dem GSM-Modul (9) eine Schnittstelle zur drahtlosen Datenübertragung (10) oder ein SIM-Kartenleser (17) zugeordnet sind.

15. Adapter nach Anspruch 14, **dadurch gekennzeichnet, dass** in den Adapter (2) eine Freisprechelektronik (FE) oder Teile einer Freisprechelektronik (FE) integriert sind.
